# FASCICULE DE BREVET EUROPEEN

(11) **EP 3 158 241 B1**
(45) Date de publication et mention de la délivrance du brevet: **04.04.2018**
(21) Numéro de dépôt: 15725681.9
(22) Date de dépôt: 08.06.2015
(51) Int. Cl.: F16K 31/04, F16K 1/22

(54) **VANNE MOTORISÉE ET PROCÉDURE D'ASSEMBLAGE D'UN MOYEN DE FIXATION**
MOTOR BETÄTIGTES VENTIL UND MONTAGEVERFAHREN EINES BEFESTIGUNGSMITTELS
MOTOR OPERATED VALVE AND ASSEMBLY PROCEDURE OF A FIXING MEANS

(30) Priorité: 20.06.2014 FR 1455740
(43) Date de publication de la demande: 26.04.2017
(73) Titulaire: MMT AG, 6300 Zug (CH)
(72) Inventeur: MELLERE, Cédric, F-25190 Soulce Cernay (FR); BROSSARD, Olivier, F-25470 Fessevillers (FR)
(74) Mandataire: Breesé, Pierre
(86) Numéro de dépôt international: PCT/EP2015/062661
(87) Numéro de publication internationale: WO 2015/193135

(56) Documents cités:
- FR-A1- 2 511 113
- FR-A1- 2 997 745
- US-A- 4 805 582

## Description

### DOMAINE TECHNIQUE DE L'INVENTION

L'invention se rapporte au domaine des ensembles motorisés et plus particulièrement au moyen de fixation permettant de réaliser la liaison entre l'actionneur et la vanne. On rencontre ce genre de système dans diverses industries, dont l'industrie automobile, pour la gestion des débits d'air et de liquide, permettant de faire fonctionner correctement le moteur du véhicule.

### ETAT DE LA TECHNIQUE ANTERIEURE

Les moteurs thermiques (pour véhicule automobile, camion, engin de chantier...) fonctionnent grâce à l'explosion d'un mélange air / carburant dans la chambre de combustion des cylindres. La boucle d'air du moteur, dont la fonction est l'acheminement, la gestion et l'évacuation de l'air alimentant le moteur, fonctionne à l'aide de différentes vannes. Pour assurer un fonctionnement correct et optimal du moteur, ces vannes peuvent se déplacer d'une position d'ouverture à une position de fermeture et elles comportent un actionneur apte à réaliser ce déplacement. Cet actionneur se situe à proximité de la vanne et il est généralement directement fixé sur la vanne qu'il pilote.

Selon les applications, la fixation d'un actionneur sur une vanne peut nécessiter un moyen de fixation capable de remplir plusieurs exigences contribuant au bon fonctionnement de la vanne motorisée. Typiquement, le moyen de fixation doit rendre solidaire la liaison entre l'actionneur et la vanne. Le moyen de fixation doit également rendre étanche la liaison entre l'actionneur et la vanne afin d'interdire toute pollution ou détérioration des composants de la vanne motorisée par des fluides externes : un joint d'étanchéité statique est généralement intégré entre l'actionneur et la vanne et le moyen de fixation doit venir comprimer efficacement ce joint et obtenir ainsi l'étanchéité souhaitée. Le moyen de fixation doit permettre un positionnement relatif entre l'actionneur et la vanne précis et fiable pour éviter tout défaut d'alignement qui réduirait ainsi la robustesse et la durée de vie de l'ensemble. Une autre fonction attendue de la part du moyen de fixation est la non détérioration de l'actionneur et/ou de la vanne, notamment de leurs caractéristiques mécaniques afin d'éviter tout risque d'endommagement prématuré lors de la phase de montage et/ou lors des premières phases de fonctionnement : la mise en place et le design du moyen de fixation doivent alors être adaptés à l'application et aux matières utilisées pour permettre une bonne maitrise du niveau maximal d'effort appliqué. Une fonction à assurer aussi par le moyen de fixation est d'être démontable, c'est-à-dire d'avoir la possibilité de désolidariser l'actionneur et la vanne via une procédure simple. Le moyen de fixation doit également présenter un encombrement très faible vis-à-vis des dimensions et des formes de l'actionneur et de la vanne pour ne pas pénaliser l'intégration de la vanne motorisée sur le véhicule. Enfin, les vannes motorisées pour application automobile étant produites dans des volumes importants, le procédé de mise en place et d'assemblage d'un actionneur sur une vanne doit être simple, robuste, capable, répétable et automatisable. Pour finir, le coût du moyen de fixation utilisé doit être le plus faible possible compte tenu des volumes importants de production.

Certaines applications automobiles nécessitent un moyen de fixation de l'actionneur sur la vanne répondant parfaitement et intégralement à l'ensemble des exigences précédentes. C'est le cas notamment des vannes de recirculation de gaz d'échappement basse pression intégrées directement sur la ligne d'échappement du véhicule. Ces vannes étant généralement intégrées à proximité de la sortie de la ligne d'échappement, la température des gaz les traversant est assez faible et n'excède jamais 150°C : pour des questions de coûts et de masse on utilise alors du plastique injecté pour réaliser divers sous-composants de l'actionneur et la vanne. Le moyen de fixation le mieux adapté doit alors appliquer un effort axial de contact entre l'actionneur et la vanne suffisamment élevé pour comprimer efficacement le joint d'étanchéité intercalé et compenser les importantes sollicitations mécaniques vibratoires ; mais sans jamais dépasser un niveau d'effort maximal dépendant de la surface d'appui du moyen de fixation sur l'actionneur et sur la vanne, au risque de dépasser la limite d'élasticité et/ou la limite de rupture de la matière plastique formant l'actionneur et la vanne, empêchant une fixation conforme et induisant un mauvais fonctionnement de la vanne motorisée. Ces vannes étant intégrées dans un espace extrêmement réduit le long de la ligne d'échappement, des actionneurs électriques tels que des moteurs couple avec fonction de rappel en début de course intégrée constituent une bonne solution pour effectuer le déplacement entre la position ouverte et la position fermée de la vanne.

La manière de fixer un actionneur sur une vanne pour des applications automobiles n'est pas une nouvelle problématique pour l'homme du métier, l'état de l'art fournit déjà de nombreuses solutions.

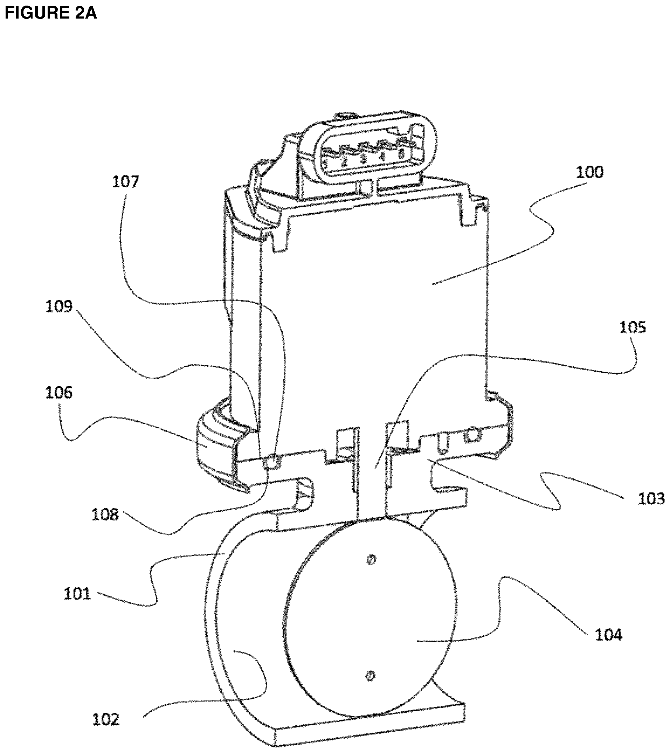

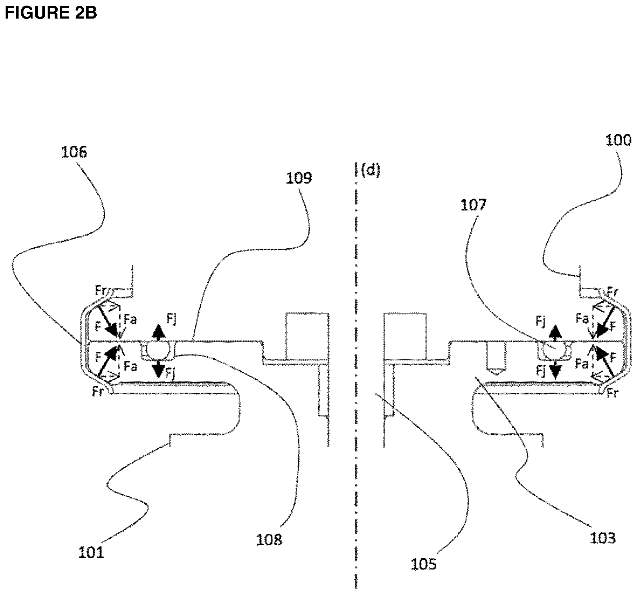

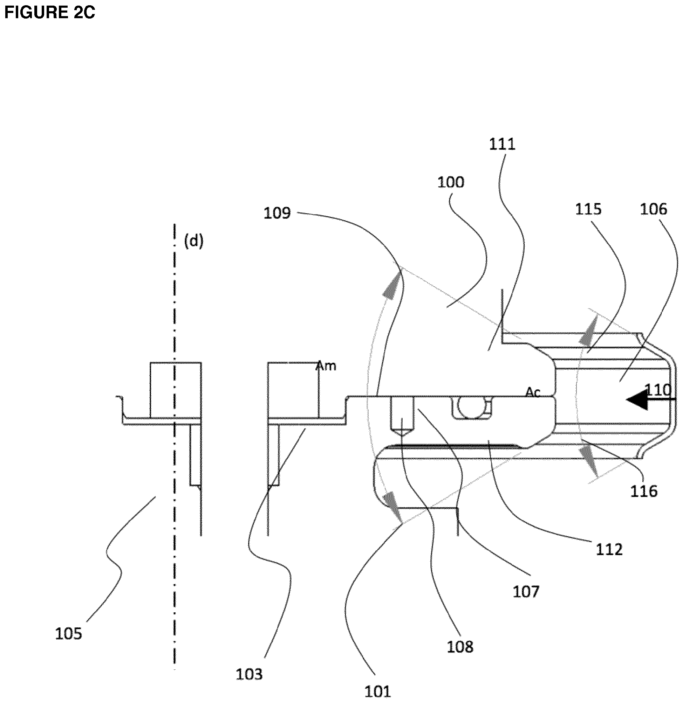

On connaît par exemple les brevets US20120068099 et US20130168590 qui revendiquent une vanne en 2 parties comprenant un corps de vanne intégrant une bride de vanne, un actionneur apte à se coupler au corps de vanne et intégrant une bride d'actionneur et un moyen de fixation configuré pour serrer la bride de vanne à la bride d'actionneur, fixant ainsi et de manière démontable l'actionneur au corps de vanne. Le moyen de fixation intègre un ou plusieurs éléments de serrage réglables pour tendre le moyen de fixation sur les brides de vanne et d'actionneur. La figure 2 du document US20120068099 présente explicitement un moyen de fixation d'un actionneur sur une vanne composé de 2 demi-colliers rigides reliés entre eux à une première extrémité par un anneau de liaison rigide et à une deuxième extrémité par un système vis-écrou destiné à tendre les colliers. Cette solution présente différents inconvénients majeurs : tout d'abord la complexité du moyen de fixation constitué par 5 composants rendant sa mise en place et son montage compliqués, une industrialisation et une automatisation quasi impossible et représentant une masse totale significative pouvant être dommageable pour certaines applications ; ensuite la sensibilité trop faible du système vis-écrou de réglage de la mise en tension des colliers pour l'obtention de l'effort de contact entre l'actionneur et la vanne : la très grande raideur de ce type de solution peut amener lors de l'assemblage une rupture franche des brides actionneur et vanne réalisées en matière plastique ; et enfin la forme des éléments (notamment les extrémités des colliers nécessaires à leur fixation) demandant des moyens de fabrication coûteux et représentant un encombrement significatif sur la périphérie des brides actionneur et vanne.

On connaît également le brevet US4805582 revendiquant une vanne de circulation de gaz d'échappement. Le document présente un actionneur pris en sandwich entre un support de fixation et un élément de siège de la vanne avec une bande serrant le support de fixation à l'élément de siège de la vanne. La description est très succincte et une seule vue de coupe donne quelques informations, principalement sur le fonctionnement et la manière de venir fermer le conduit des gaz par la soupape de la vanne. On ne connaît pas la forme générale de la bande de serrage et on ne voit pas comment elle est mise en place, fixée sur le système et surtout comment est généré précisément l'effort axial de contact entre l'actionneur et la vanne.

On connaît aussi le brevet EP2597294 présentant une vanne de recirculation de gaz d'échappement comprenant un actionneur, une vanne, un joint d'étanchéité intercalé et un moyen de fixation constitué par 2 oreilles latérales intégrées à l'actionneur, 2 trous taraudés intégrés dans le corps de la vanne et 2 vis traversant les oreilles de l'actionneur et engageant les taraudages de la vanne. Cette solution présente des inconvénients, notamment l'encombrement périphérique important nécessaire pour la mise en place des oreilles, des taraudages et des vis ; le coût important composé majoritairement par les 2 vis de fixation et la réalisation par usinage des 2 trous taraudés. Enfin, les oreilles de l'actionneur étant réalisées en plastique et la vanne étant en métal, des inserts de compensation de force ont été intégrés sous les têtes de vis afin de limiter le dépassement de la limite élastique et le fluage des oreilles plastiques après serrage des 2 vis et tout au long de la durée de vie de l'ensemble.

On connaît enfin le brevet FR2997745 qui présente une vanne motorisée avec un surmoulage plastique formant à la fois l'actionneur et la vanne. L'inconvénient principal est ici l'impossibilité de désolidariser l'actionneur de la vanne sans une détérioration irrémédiable.

### EXPOSE DE L'INVENTION

La présente invention a pour but de remédier aux problèmes rencontrés par les solutions de l'art antérieur en conférant à un ensemble motorisé un moyen de fixation apportant efficacement les fonctions de solidarisation et positionnement de l'actionneur sur la vanne, d'étanchéité, de bonne maitrise de l'effort de contact entre l'actionneur et la vanne, de possibilité de démontage via une procédure simple, de faible encombrement, de procédé de mise en place simple et robuste et de coût faible et maitrisé des composants nécessaires à la fixation.
Particulièrement l'invention concerne un ensemble motorisé comprenant un actionneur, une vanne constituée d'un conduit, d'un support de vanne et d'un clapet apte à obturer le conduit, le clapet étant configuré à être mis en mouvement par l'actionneur par l'intermédiaire d'un axe de transmission, un joint d'étanchéité et un moyen de fixation solidarisant l'actionneur à la vanne, le joint d'étanchéité étant positionné dans une gorge du support de vanne et en contact avec la base de l'actionneur, l'étanchéité de la vanne étant assurée par un écrasement du joint sous une force Fⱼ, l'ensemble actionneur, axe de transmission, clapet ayant une masse M et étant configuré à être soumis à une accélération relative à la vanne égale à X g, g étant l'accélération de la pesanteur, caractérisé en ce que le moyen de fixation est sous la forme d'un collier de serrage constitué exclusivement d'une ou plusieurs bandes identiques et déformables, en ce que le collier de serrage présente une forme complémentaire à la base de l'actionneur d'une part et au support de vanne d'autre part, en ce que le collier de serrage enserre la base de l'actionneur et au moins en partie le support de vanne et en ce que la ou les bandes déformables sont déformables localement de manière élastique réversible afin de comprimer le joint d'étanchéité en appliquant un effort axial de contact Fₐ entre l'actionneur et la vanne supérieur à S₁×(Fⱼ + M×X×g), avec S₁ un coefficient de sécurité supérieur à 1, et déformables localement de manière plastique irréversible afin de verrouiller la position.
De manière préférentielle, la base de l'actionneur et la vanne sont réalisées en matière plastique injectée et le rapport S₂×F/A est inférieur à la limite élastique Rₐ de la matière utilisée pour l'actionneur et à la limite élastique Rᵥ de la matière utilisée pour la vanne, avec A la surface de contact entre le moyen de fixation et l'actionneur, respectivement la vanne, S₂ un coefficient de sécurité supérieur à 1 et F l'effort de contact entre l'actionneur et la vanne.
Avantageusement, le collier de serrage présente une forme sensiblement circulaire et une section en forme de V définissant un angle de charge A_{c}, la base de l'actionneur et le support de vanne présentent des formes circulaires sensiblement tronconiques telles que définissant, ensemble, un angle de montage Aₘ, A_{c} étant inférieur à Aₘ avec préférentiellement un rapport Aₘ/A_{c} inférieur à 1,1 et typiquement de l'ordre de 1,03.
Dans un mode de réalisation particulier, le collier de serrage est constitué de plusieurs bandes déformables identiques et reliées solidaires entre elles par la forme complémentaire de leurs extrémités et les bandes sont assemblées tête-bêche.
Dans ce cas, la forme complémentaire des bandes déformables peut comporter à une première extrémité une languette et à une deuxième extrémité une lumière et la languette est prévue pour traverser la lumière.
Dans un autre mode de réalisation, le collier de serrage est constitué d'une seule bande circulaire, fermée et déformable comportant une forme complémentaire.
Dans un mode de réalisation particulier, le collier de serrage est démontable par déformation ou destruction de l'une au moins des formes complémentaires et les bandes déformables constituant le moyen de fixation sont fabriquées uniquement par des procédés de découpage et de pliage.
L'objet de l'invention est aussi de proposer une procédure d'assemblage d'un moyen de fixation sur un ensemble motorisé actionneur et vanne caractérisée en ce qu'elle comporte 4 étapes : une étape consiste à positionner le moyen de fixation relativement à l'ensemble vanne et actionneur ; une étape consiste à déformer localement de manière élastique réversible le moyen de fixation ; une étape consiste à déformer localement de manière plastique irréversible le moyen de fixation ; une étape consiste à mettre en place le clapet d'obturation dans le conduit de la vanne et à le fixer à l'axe de transmission de l'actionneur, ces étapes pouvant être exécutées dans un ordre quelconque, de manière séquentielle ou synchrone.

### BREVE DESCRIPTION DES FIGURES

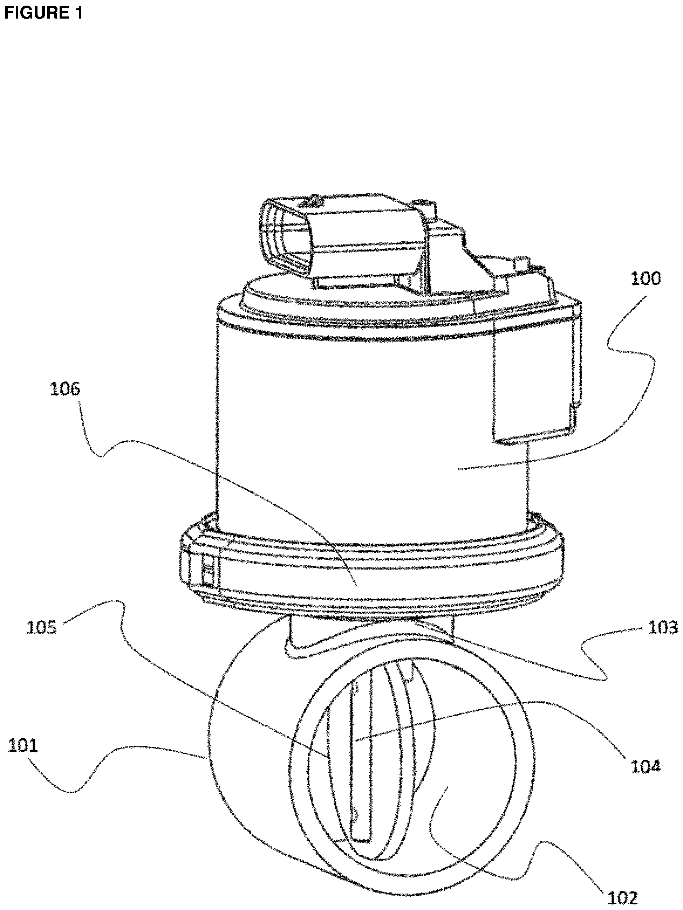

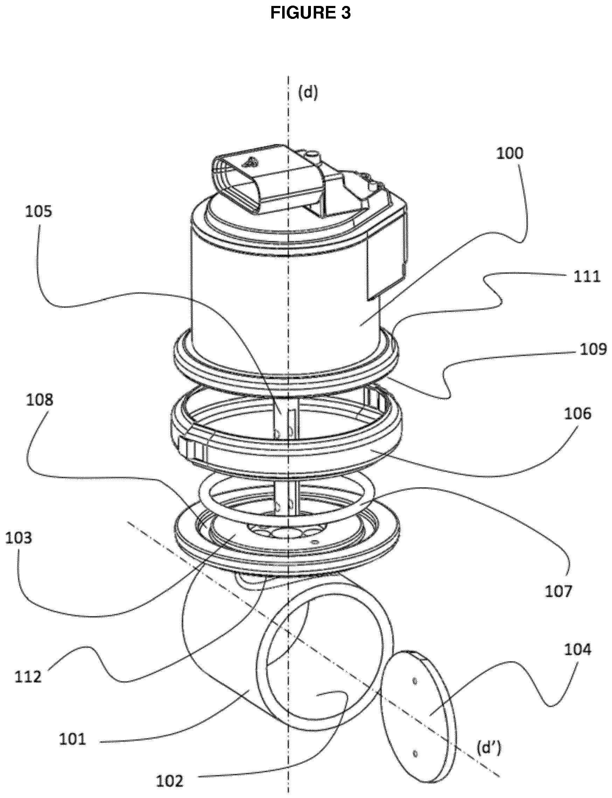

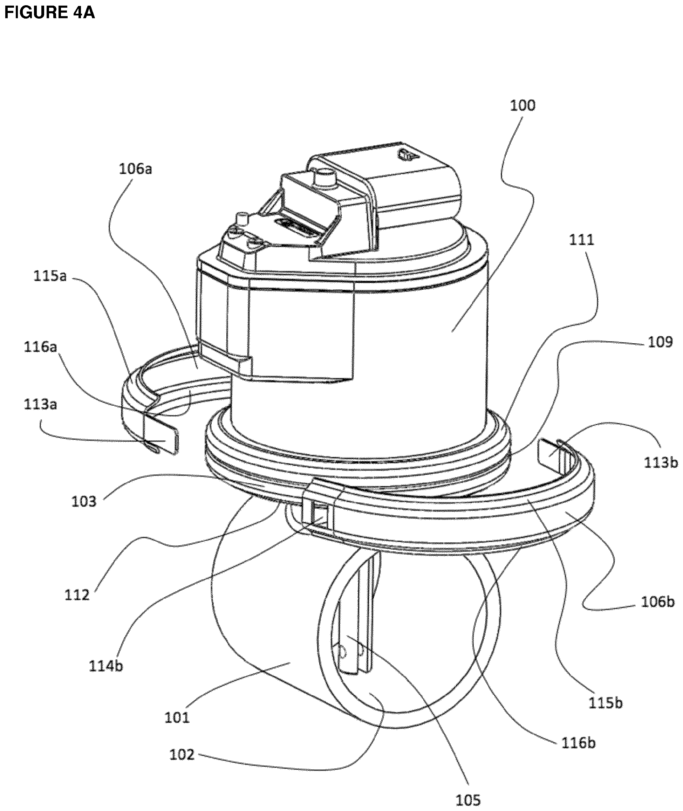

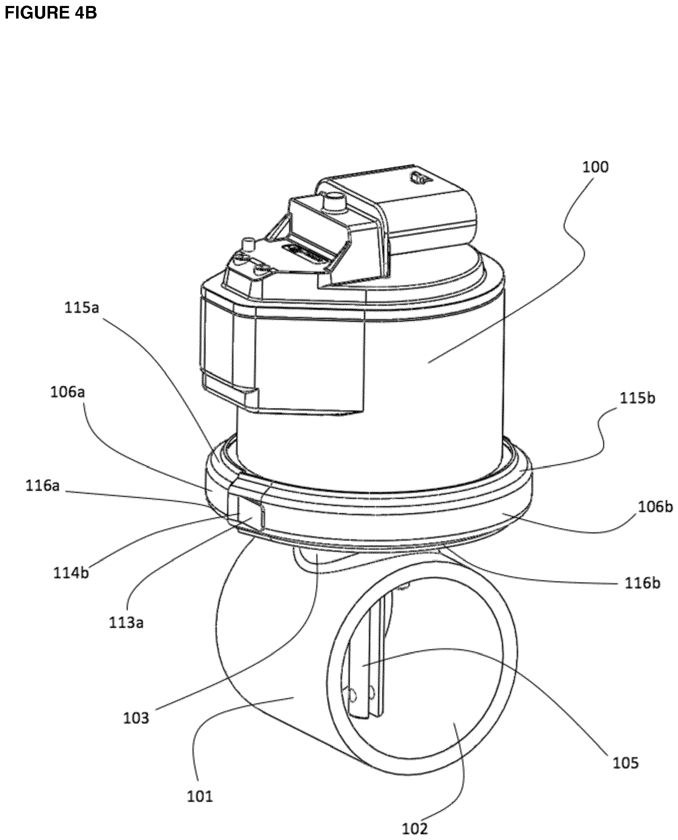

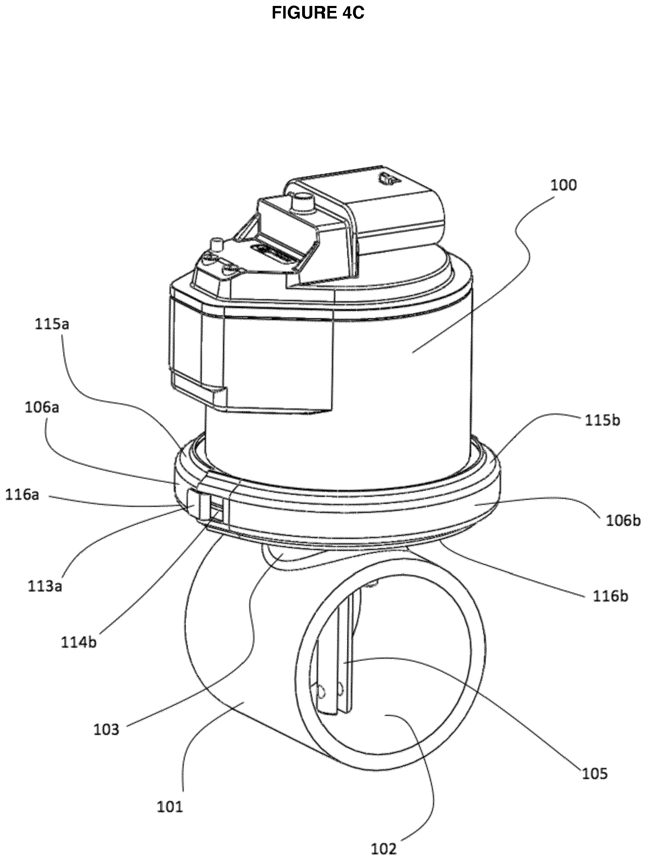

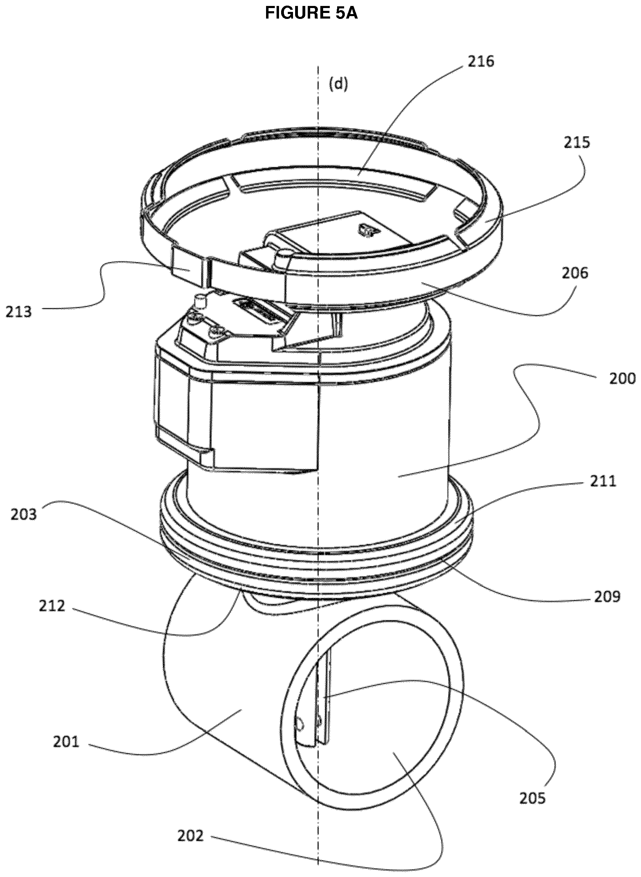

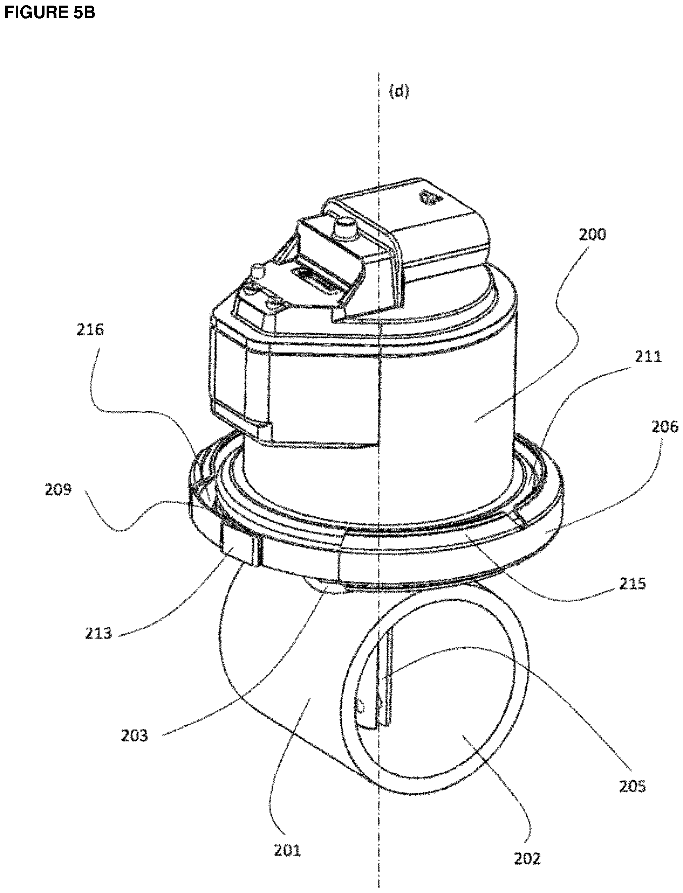

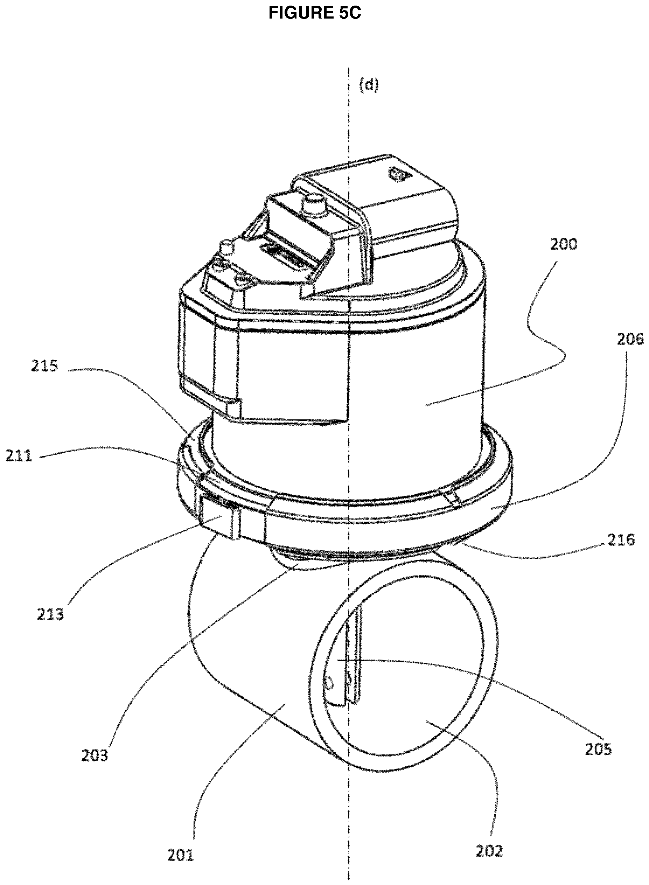

D'autres caractéristiques et avantages de l'invention ressortiront à la lecture qui suit d'exemples de réalisation détaillés, en référence aux figures annexées qui représentent respectivement :
**La** **figure 1****,** une vue générale d'un ensemble motorisé selon l'invention,
**La** **figure 2A****,** une vue en coupe d'un ensemble motorisé selon l'invention,
**La** **figure 2B****,** une vue de détails en coupe d'un ensemble motorisé selon l'invention où figurent les efforts mis en jeu,
**La** **figure 2C****,** une vue de détails en coupe d'un ensemble motorisé selon l'invention où figurent les grandeurs géométriques,
**La** **figure 3****,** une vue en éclaté d'un ensemble motorisé selon l'invention,
**La** **figure 4A****,** une vue générale d'un premier mode de réalisation d'un ensemble motorisé selon l'invention, en phase de positionnement avant assemblage,
**La** **figure 4B****,** une vue générale d'un premier mode de réalisation d'un ensemble motorisé selon l'invention, en phase assemblée,
**La** **figure 4C****,** une vue générale d'un premier mode de réalisation d'un ensemble motorisé selon l'invention, en phase verrouillée,
**La** **figure 5A****,** une vue générale d'un second mode de réalisation d'un ensemble motorisé selon l'invention, en phase de positionnement avant assemblage,
**La** **figure 5B****,** une vue générale d'un second mode de réalisation d'un ensemble motorisé selon l'invention, en phase d'assemblage,
**La** **figure 5C****,** une vue générale d'un second mode de réalisation d'un ensemble motorisé selon l'invention, en phase assemblée et verrouillée,

### DESCRIPTION DETAILLEE D'UN MODE DE REALISATION

La **figure 1** représente une vue générale d'un ensemble motorisé selon l'invention. Un actionneur 100 est relié au support de vanne 103 d'une vanne 101 au moyen d'un moyen de fixation 106, sous la forme d'un collier de serrage spécifique, l'ensemble étant l'objet de l'invention. La vanne 101 comporte un conduit 102 pour la circulation de fluide et un clapet 104 apte à obturer ou non le passage du fluide dans le conduit 102. Le clapet 104 est déplacé entre une position dite d'ouverture et une position dite de fermeture sous l'effet de l'actionneur 100 par l'intermédiaire d'un axe de transmission 105 qui porte directement le clapet 104.

La **figure 2A** représente une vue en coupe d'un ensemble motorisé selon l'invention. Pour assurer l'étanchéité du contact entre l'actionneur 100 et le support de vanne 103, un joint d'étanchéité 107 est positionné dans une gorge 108 du support de vanne 103. L'étanchéité est obtenue par compression et écrasement du joint 107 en contact avec la base 109 de l'actionneur 100 sous l'effet du moyen de fixation 106.
La **figure 2B** représente, respectivement à la **figure 2A****,** une vue de détails en coupe d'un ensemble motorisé selon l'invention. Sous l'effet de sa compression et de son écrasement, le joint d'étanchéité 107 induit un effort Fⱼ sur la base 109 de l'actionneur 100 et sur le support 103 de la vanne 101. L'effort Fⱼ est parallèle à une axe (d) défini par l'axe de transmission 105, il est orienté vers le haut sur la base 109 de l'actionneur 100 et orienté vers le bas sur le support 103 de la vanne 101 : l'effort Fⱼ tend ainsi à éloigner la base 109 du support 103 et à désolidariser l'actionneur 100 de la vanne 101. En position de montage telle que représentée sur la **figure 2B****,** le moyen de fixation 106 induit un effort de liaison F sur la base 109 de l'actionneur 100 et sur le support 103 de la vanne 101 dans des directions opposées. Selon un axe (d) défini par l'axe de transmission 105, l'effort de liaison F se décompose sur la base 109 de l'actionneur 100 et sur le support 103 de la vanne 101 en un effort radial Fᵣ orthogonal à la droite (d) et orienté en direction de la droite (d), et en un effort axial Fₐ parallèle à la droite (d), dirigé vers le bas sur la base 109 de l'actionneur 100 et dirigé vers le haut sur le support 103 de la vanne 101. La construction axisymétrique de la vanne motorisée selon l'invention permet d'auto-équilibrer et d'annuler ainsi les effets de l'effort radial Fᵣ. L'effort axial Fₐ étant opposé à l'effort de compression du joint Fⱼ au niveau de la base 109 de l'actionneur 100 et au niveau du support 103 de la vanne 101, on choisit et dimensionne un moyen de fixation 106 pour que Fₐ soit supérieur à Fⱼ. Les ensembles motorisés selon l'invention pouvant être soumises à des accélérations selon l'axe (d) de l'ordre de X g, g étant l'accélération de la pesanteur, on choisit et dimensionne le moyen de fixation 106 pour avoir Fₐ supérieur à S₁×(Fⱼ + M×X×g) avec M la masse de l'ensemble actionneur 100, axe de transmission 105, clapet 104 et S₁ un coefficient de sécurité supérieur à 1. Typiquement et à titre d'exemple non limitatif, on rencontre des valeurs de 200N pour l'effort de compression du joint Fⱼ, des ensembles de masse M de 0.35 kg, des accélérations relatives entre l'actionneur 100 et la vanne 101 X de 40G et des coefficients de sécurité S₁ de 2, soit un effort axial de liaison Fₐ à produire par le moyen de fixation 106 supérieur à 675N.
La **figure 2C** représente, respectivement aux **figures 2A** **et** **2B****,** une vue de détails en coupe d'un ensemble motorisé selon l'invention. Le moyen de fixation 106 est ici représenté en position avant montage. Il présente une section d'épaisseur sensiblement constante et de forme en V définissant un angle de charge A_{c}. L'ensemble support de vanne 103 et base d'actionneur 109 définit également une forme spécifique en V présentant un angle de montage Aₘ au niveau des surfaces 111 de la base 109 de l'actionneur 100 et 112 du support 103 de la vanne 101. Afin de maintenir le joint d'étanchéité 107 en position d'écrasement et d'obtenir un effort axial de liaison Fₐ supérieur à S₁×(Fⱼ + M×X×g), on choisit un angle de charge A_{c} inférieur à l'angle de montage Aₘ. Ainsi, lors de l'opération d'assemblage du moyen de fixation 106 sur l'ensemble vanne et actionneur, représenté par le déplacement 110, le moyen de fixation 106 va venir en contact et enserrer la base 109 de l'actionneur 100 et le support 103 de la vanne 101. La surface 115 du moyen de fixation 106 va venir en contact avec la surface 111 de la base 109 de l'actionneur 100, la surface 116 du moyen de fixation 106 va venir en contact avec la surface 112 du support 103 de la vanne 101, induisant une déformation élastique réversible du moyen de fixation 106 localisée au niveau des surfaces 115 et 116, cette déformation élastique réversible induisant l'effort de liaison F. Les matières choisies pour réaliser la vanne 101 et la base 109 de l'actionneur 100 étant préférentiellement du plastique injecté, on choisit et dimensionne le moyen de fixation 106 pour avoir S₂×F/A inférieur à Rₐ et inférieur à Rᵥ, avec S₂ un coefficient de sécurité supérieur à 1, A l'aire de la surface 111 et de la surface 112, Rₐ la limite d'élasticité du plastique utilisé pour fabriquer la base 109 de l'actionneur 100, Rᵥ la limite d'élasticité du plastique utilisé pour fabriquer la vanne 101. Typiquement et à titre d'exemple non limitatif, on choisit des valeurs de 60° pour l'angle de charge A_{c} et de 62° pour l'angle de montage Aₘ. Typiquement et à titre d'exemple non limitatif, on rencontre des valeurs de 300mm² pour A, de 850N pour F et des coefficients de sécurité S₂ de 6 soit une contrainte de 17 MPa pour des matières plastiques injectées ayant des limites d'élasticité Rₐ et Rᵥ de l'ordre de 150 MPa.

La **figure 3** représente une vue en éclaté d'un ensemble motorisé selon l'invention. Les surfaces 111 et 112 en contact avec le moyen de fixation 106 présentent sensiblement des formes en tronc de cône. L'actionneur 100, le moyen de fixation 106, le joint d'étanchéité 107 et le support de vanne 103 sont alignés selon un axe défini par la droite (d), le conduit 102 de la vanne 101 et le clapet d'obturation 104 sont alignés selon un axe défini par la droite (d') tels que les droites (d) et (d') sont sensiblement orthogonales.

La **figure 4A** représente une vue générale d'un premier mode de réalisation d'un ensemble motorisé selon l'invention, en phase de positionnement avant assemblage. Un actionneur 100 comprenant une base 109 et une surface 111 sensiblement de forme tronconique, est mis en place sur un support 103 d'une vanne 101 comprenant un conduit 102 pour la circulation d'un fluide, le support 103 incluant une surface 112 sensiblement de forme tronconique. Un joint d'étanchéité (non visible sur la figure) est intégré entre l'actionneur 100 et la vanne 101 tel que décrit sur les figures précédentes, le joint est ici dans un état non comprimé et non écrasé, la base 109 de l'actionneur 100 n'étant pas en contact axial avec le support 103 de la vanne 101. Un moyen de fixation de l'actionneur 100 sur la vanne 101 constitué de 2 bandes 106a et 106b rigoureusement identiques est positionné de part et d'autre des surfaces 111 et 112, sans être en contact avec. Les bandes 106a et 106b comportent à leurs extrémités des formes complémentaires : à une première extrémité une languette déformable de verrouillage 113a, 113b et à une deuxième extrémité une lumière de verrouillage 114a (non visible sur la figure), 114b. La forme et les dimensions des languettes déformables de verrouillage 113a, 113b sont choisies respectivement à la forme et aux dimensions des lumières de verrouillage 114a, 114b pour que les languettes puissent traverser les lumières. Les bandes 106a et 106b sont positionnées de sorte que la languette déformable de verrouillage 113a de la bande 106a se retrouve à proximité de la lumière de verrouillage 114b de la bande 106b ; et de sorte que la languette déformable de verrouillage 113b de la bande 106b se retrouve à proximité de la lumière de verrouillage 114a de la bande 106a. Les bandes 106a et 106b comportent également des surfaces déformables 115a, 115b destinées à venir en contact sur la surface 111 de la base 109 de l'actionneur 100, et des surfaces déformables 116a, 116b destinées à venir en contact sur la surface 112 du support 103 de la vanne 101.

La **figure 4B** représente une vue générale d'un premier mode de réalisation d'un ensemble motorisé selon l'invention, en phase assemblée, respectivement à la **figure 4A****.** Le moyen de fixation de l'actionneur 100 sur la vanne 101 constitué de 2 bandes 106a et 106b rigoureusement identiques est mis en place et l'actionneur 100 est ici assemblé sur la vanne 101. Les surfaces déformables 115a, 115b des bandes 106a, 106b maintenant en contact avec la surface tronconique 111 de la base 109 de l'actionneur 100 et les surfaces déformables 116a, 116b des bandes 106a, 106b maintenant en contact avec la surface tronconique 112 du support 103 de la vanne 101, subissent une déformation élastique réversible permettant de générer l'effort de liaison nécessaire de l'actionneur 100 à la vanne 101. La languette déformable de verrouillage 113a (respectivement 113b non représentée sur la figure) de la bande 106a traverse dans cette position la lumière de verrouillage 114b (respectivement 113a non représentée sur la figure) de la bande 106b.

La **figure 4C** représente une vue générale d'un premier mode de réalisation d'un ensemble motorisé selon l'invention, en phase verrouillée, respectivement aux **figures 4A** **et** **4B****.** Pour maintenir les surfaces déformables 116a, 116b et 115a, 115b des bandes 106a, 106b dans un état de déformation élastique réversible permettant de générer l'effort de liaison nécessaire de l'actionneur 100 à la vanne 101, on applique localement aux languettes déformables de verrouillage 113a, 113b (non visible sur la figure) une déformation plastique irréversible en repliant les languettes sur les lumières de verrouillage 114b, 114a (non visible sur la figure) de sorte à figer la position des bandes 106a, 106b du moyen de fixation relativement à l'actionneur 100 et à la vanne 101. Après intégration du clapet (non représenté sur la figure) dans le conduit 102 de la vanne 101 et fixation à l'axe de transmission 105, la vanne motorisée est dans cette configuration correctement assemblée et prête à être intégrée sur le moteur thermique du véhicule. Si une défaillance de l'actionneur 100, de la vanne 101 ou de tout autre élément de la vanne motorisée survient, une désolidarisation de l'actionneur 100 et de la vanne 101 peut s'avérer nécessaire, pour des questions de coût en évitant ainsi de jeter l'ensemble des éléments. Il suffit pour cela d'appliquer une déformation sur les languettes de verrouillage 113a, 113b (non visible sur la figure) de sorte à les ramener dans une position sensiblement équivalente à celle de la figure 4B. On peut également détruire les languettes 113a, 113b (non visible sur la figure) à l'aide par exemple d'un simple outil coupant permettant de les sectionner. On peut ainsi retirer facilement les 2 bandes 106a, 106b du moyen de fixation pour supprimer la liaison entre l'actionneur 100 et la vanne 101. L'élément défectueux peut ainsi être remplacé par un élément parfaitement fonctionnel et on effectue une nouvelle opération d'assemblage avec des bandes 106a, 106b neuves ou déjà utilisées.

La **figure 5A** représente une vue générale d'un second mode de réalisation d'un ensemble motorisé selon l'invention, en phase de positionnement avant assemblage. Un actionneur 200 comportant un axe de transmission 205 et une base 209 incluant une surface 211 de forme sensiblement tronconique, est mis en place sur un support 203 d'une vanne 201 comprenant un conduit 202 pour la circulation d'un fluide, le support 203 incluant une surface 212 sensiblement de forme tronconique. Un joint d'étanchéité (non visible sur la figure) est intégré entre l'actionneur 200 et la vanne 201 tel que décrit sur les figures précédentes, le joint est ici dans un état non comprimé et non écrasé, la base 209 de l'actionneur 200 n'étant pas en contact axial avec le support 203 de la vanne 201. Un moyen de fixation de l'actionneur 200 sur la vanne 201 constitué d'une seule bande circulaire et fermée 206 en forme de collier est positionné de manière coaxiale à l'axe (d) défini par l'axe de transmission 205, la bande circulaire et fermée 206 étant placée dans la zone en haut de l'actionneur 200. La bande circulaire et fermée 206 comporte une surface déformable 215 (divisée à titre d'exemple non limitatif en 4 sections égales), dont la forme est complémentaire à la surface 211 de la base 209 de l'actionneur 200 et destinée à venir en contact sur la surface 211 ; et une surface 216 (divisée à titre d'exemple non limitatif en 4 sections égales) dont la forme est complémentaire à la surface 212 du support 203 de la vanne 201 et destinée à venir en contact sur la surface 212. La bande circulaire et fermée 206 comporte également une languette déformable de verrouillage 213.

La **figure 5B** représente une vue générale d'un second mode de réalisation d'un ensemble motorisé selon l'invention, en phase d'assemblage, respectivement à la **figure 5A****.** Le moyen de fixation constitué par la seule bande circulaire et fermée 206 est dimensionné pour que son diamètre intérieur soit strictement supérieur au diamètre extérieur de l'actionneur 200 ; et strictement supérieur au diamètre extérieur de la base 209 de l'actionneur 200 et du support 203 de la vanne 201, de sorte qu'il puisse linéairement se déplacer le long de l'axe (d) pour se positionner dans le plan définissant le contact entre la base 209 de l'actionneur 200 et le support 203 de la vanne 201, la base 209 de l'actionneur 200 n'étant pas encore en contact avec le support 203 de la vanne 201 et le joint d'étanchéité (non visible sur la figure) n'étant pas encore comprimé et écrasé.

La **figure 5C** représente une vue générale d'un second mode de réalisation d'un ensemble motorisé selon l'invention, en phase assemblée et verrouillée, respectivement aux **figures 5A** **et** **5B****.** Une déformation plastique irréversible est appliquée à la languette déformable de verrouillage 213 dans le but de mettre en contact la surface 215 de la bande circulaire et fermée 206 et la surface 211 de la base 209 de l'actionneur 200, et dans le but de mettre en contact la surface 216 de la bande circulaire et fermée 206 et la surface 212 (non visible sur la figure) du support 203 de la vanne 201. Les surfaces 215 et 216 de la bande circulaire et fermée 206 subissent dans cette position une déformation élastique réversible permettant de générer l'effort de liaison nécessaire de l'actionneur 200 à la vanne 201. Après intégration du clapet (non représenté sur la figure) dans le conduit 202 de la vanne 201 et fixation à l'axe de transmission 205, la vanne motorisée est dans cette configuration correctement assemblée et prête à être intégrée sur le moteur thermique du véhicule. Si une défaillance de l'actionneur 200, de la vanne 201 ou de tout autre élément de la vanne motorisée survient, une désolidarisation de l'actionneur 200 et de la vanne 201 peut s'avérer nécessaire, pour des questions de coût en évitant ainsi de jeter l'ensemble des éléments. Il suffit pour cela d'appliquer une déformation sur la languette de verrouillage 213 de sorte à la ramener dans une position sensiblement équivalente à celle de la figure 5B. On peut également détruire la languette 213 à l'aide par exemple d'un simple outil coupant permettant de la sectionner. On peut ainsi retirer facilement la bande circulaire et fermée 206 pour supprimer la liaison entre l'actionneur 200 et la vanne 201. L'élément défectueux peut ainsi être remplacé par un élément parfaitement fonctionnel et on effectue une nouvelle opération d'assemblage avec une bande circulaire et fermée 206 neuve ou déjà utilisée.

## Revendications

1. Ensemble motorisé comprenant un actionneur (100-200), une vanne (101-201) constituée d'un conduit (102-202), d'un support de vanne (103-203) et d'un clapet (104) apte à obturer le conduit, le clapet étant configuré à être mis en mouvement par l'actionneur par l'intermédiaire d'un axe de transmission (105-205), un joint d'étanchéité (107) et un moyen de fixation (106-206) solidarisant l'actionneur à la vanne, le joint d'étanchéité étant positionné dans une gorge (108) du support (103-203) de vanne et en contact avec la base (109-209) de l'actionneur, l'étanchéité de la vanne étant assurée par un écrasement du joint sous une force Fⱼ, l'ensemble actionneur, axe de transmission, clapet ayant une masse M et étant configuré à être soumis à une accélération relative à la vanne égale à X g, g étant l'accélération de la pesanteur, **caractérisé en ce que** le moyen de fixation est sous la forme d'un collier de serrage constitué exclusivement d'une ou plusieurs bandes (106a, 106b, 206) identiques et déformables, **en ce que** le collier de serrage présente une forme complémentaire à la base de l'actionneur d'une part et au support de vanne d'autre part, **en ce que** le collier de serrage enserre la base de l'actionneur et au moins en partie le support de vanne **et en ce que** la ou les bandes déformables sont déformables localement de manière élastique réversible afin de comprimer le joint d'étanchéité en appliquant un effort axial de contact Fₐ entre l'actionneur et la vanne supérieur à S₁×(Fⱼ + M×X×g), avec S₁ un coefficient de sécurité supérieur à 1, et déformables localement de manière plastique irréversible afin de verrouiller la position.

2. Ensemble motorisé selon la revendication 1 **caractérisée en ce que** la base de l'actionneur et la vanne sont réalisées en matière plastique injectée **et en ce que** S₂×F/A est inférieur à la limite élastique Rₐ de la matière utilisée pour l'actionneur et à la limite élastique Rᵥ de la matière utilisée pour la vanne, avec A la surface de contact entre l'élément de fixation et l'actionneur, respectivement la vanne, S₂ un coefficient de sécurité supérieur à 1 et F l'effort de contact entre l'actionneur et la vanne.

3. Ensemble motorisé selon la revendication 1 **caractérisée en ce que** le collier de serrage présente une forme sensiblement circulaire et une section en forme de V définissant un angle de charge A_{c}, **en ce que** la base de l'actionneur et le support de vanne présentent des formes circulaires sensiblement tronconiques telles que définissant, ensemble, un angle de montage Aₘ **et en ce que** A_{c} est inférieur à Aₘ.

4. Ensemble motorisé selon la revendication 3 **caractérisée en ce que** le rapport Aₘ/A_{c} est inférieur à 1,1.

5. Ensemble motorisé selon la revendication 4 **caractérisée en ce que** le rapport Aₘ/A_{c} est typiquement de l'ordre de 1,03.

6. Ensemble motorisé selon la revendication 5 **caractérisée en ce que** le collier de serrage est constitué de plusieurs bandes déformables identiques et reliées solidaires entre elles par la forme complémentaire de leurs extrémités **et en ce que** les bandes sont assemblées tête-bêche.

7. Ensemble motorisé selon la revendication 6 **caractérisée en ce que** la forme complémentaire des bandes déformables comporte à une première extrémité une languette (113a, 113b) et à une deuxième extrémité une lumière (114a, 114b) **et en ce que** la languette est prévue pour traverser la lumière.

8. Ensemble motorisé selon la revendication 5 **caractérisée en ce que le** collier de serrage est constitué d'une seule bande circulaire, fermée et déformable comportant une forme complémentaire.

9. Ensemble motorisé selon les revendications 7 et 8 **caractérisée en ce que** le collier de serrage est démontable par déformation ou destruction de l'une au moins des formes complémentaires.

10. Ensemble motorisé selon l'une quelconque des revendications précédentes **caractérisée en ce que** les bandes déformables constituant le moyen de fixation sont fabriquées uniquement par des procédés de découpage et de pliage.

11. Procédure d'assemblage d'un moyen de fixation sur un ensemble motorisé actionneur et vanne selon l'une quelconque des revendications précédentes **caractérisée en ce qu'**elle comporte 4 étapes,
une première étape consiste à positionner le moyen de fixation relativement à l'ensemble vanne et actionneur,
une deuxième étape consiste à déformer localement de manière élastique réversible le moyen de fixation,
une troisième étape consiste à déformer localement de manière plastique irréversible le moyen de fixation,
une quatrième étape consiste à mettre en place le clapet d'obturation dans le conduit de la vanne et à le fixer à l'axe de transmission de l'actionneur,
ces étapes pouvant être exécutées dans un ordre quelconque, de manière séquentielle ou synchrone.

## Patentansprüche

1. Motorbetriebene Vorrichtung, welche ein Stellglied (100-200) und ein Ventil (101-201), bestehend aus einer Durchführung (102-202), einer Ventilhalterung (103-203) und einer Klappe (104) zum Verschließen der Durchführung, umfasst, wobei die Klappe so gestaltet ist, dass sie über das Stellglied auf einer Antriebswelle (105-205) in Bewegung versetzt werden kann, wobei eine Dichtung (107) und ein Befestigungsmittel (106-206) das Stellglied mit dem Ventil fest verbinden, und die Dichtung in einer Rille (108) der Halterung (103-203) des Ventils in Kontakt mit dem Sockel (109-209) des Stellglieds angeordnet ist, wobei die Dichtheit des Ventils durch das Zusammendrücken der Dichtung unter Einwirkung einer Kraft Fⱼ gewährleistet wird, und die Vorrichtung bestehend aus Stellglied, Antriebswelle und Klappe ein Gewicht M hat und so gestaltet ist, dass sie einer Beschleunigung von X g relativ zum Ventil ausgesetzt werden kann, wobei g die Erdbeschleunigung ist, **dadurch gekennzeichnet, dass** das Befestigungsmittel in Form eines Klemmrings ausschließlich aus einem oder mehreren identischen, verformbaren Bändern (106a, 106b, 206) besteht, und dadurch, dass der Klemmring einerseits eine zum Sockel des Stellglieds und andererseits eine zur Ventilhalterung komplementäre Form aufweist, **dadurch gekennzeichnet, dass** der Klemmring den Sockel des Stellglieds und mindestens teilweise die Ventilhalterung umspannt, und **dadurch gekennzeichnet, dass** das oder die verformbaren Bänder örtlich elastisch und reversibel verformbar sind, um die Dichtung durch Einwirken einer axialen Kontaktkraft Fₐ zwischen Stellglied und Ventil größer S₁x(Fⱼ+MxXxg) zusammenzudrücken, wobei S₁ ein Sicherheitskoeffizient größer 1 ist, und örtlich plastisch irreversibel verformbar sind, um die Position zu verriegeln.

2. Motorbetriebene Vorrichtung nach Anspruch 1, **dadurch gekennzeichnet, dass** der Sockel des Stellglieds und das Ventil aus eingespritztem Kunststoffmaterial hergestellt sind, und dadurch, dass S₂xF/A kleiner als die Streckgrenze Rₐ des für das Stellglied benutzten Materials und kleiner als die Streckgrenze Rᵥ des für das Ventil benutzten Materials ist, wobei A die Kontaktfläche zwischen dem Befestigungselement und dem Stellglied bzw. dem Ventil, S₂ ein Sicherheitskoeffizient größer 1, und F die Kontaktkraft zwischen Stellglied und Ventil ist.

3. Motorbetriebene Vorrichtung nach Anspruch 1, **dadurch gekennzeichnet, dass** der Klemmring im Wesentlichen kreisförmig ist und einen v-förmigen Querschnitt aufweist, der einen Lastwinkel A_{c} abgrenzt, **dadurch gekennzeichnet, dass** der Sockel des Stellglieds und die Ventilhalterung runde, im Wesentlichen kegelstumpfförmige Formen aufweisen, die zusammen einen Montagewinkel Aₘ abgrenzen, und dadurch, dass A_{c} kleiner als Aₘ ist.

4. Motorbetriebene Vorrichtung nach Anspruch 3, **dadurch gekennzeichnet, dass** das Verhältnis Aₘ/A_{c} kleiner 1,1 ist.

5. Motorbetriebene Vorrichtung nach Anspruch 4, **dadurch gekennzeichnet, dass** das Verhältnis Aₘ/A_{c} in der Regel bei 1,03 liegt.

6. Motorbetriebene Vorrichtung nach Anspruch 5, **dadurch gekennzeichnet, dass** der Klemmring aus mehreren identischen verformbaren Bändern besteht, die durch die komplementäre Form ihrer Enden fest miteinander verbunden sind, und dadurch, dass die Bänder entgegengesetzt zusammengefügt sind.

7. Motorbetriebene Vorrichtung nach Anspruch 6, **dadurch gekennzeichnet, dass** die komplementäre Form der verformbaren Bänder an einem ersten Ende eine Zunge (113a, 113b) und an einem zweiten Ende eine Öffnung (114a, 114b) aufweist, und dadurch, dass die Zunge dazu vorgesehen ist, durch die Öffnung geführt zu werden.

8. Motorbetriebene Vorrichtung nach Anspruch 5, **dadurch gekennzeichnet, dass** der Klemmring aus einem einzigen kreisförmigen, geschlossenen und verformbaren Band in komplementärer Form besteht.

9. Motorbetriebene Vorrichtung nach den Ansprüchen 7 und 8, **dadurch gekennzeichnet, dass** der Klemmring durch Verformung oder Zerstörung mindestens einer der komplementären Formen demontierbar ist.

10. Motorbetriebene Vorrichtung nach einem der vorhergehenden Ansprüche, **dadurch gekennzeichnet, dass** die verformbaren Bänder, welche das Befestigungsmittel bilden, ausschließlich durch die Verfahren des Stanzens und Biegens hergestellt werden.

11. Verfahren zur Montage eines Befestigungsmittels an einer motorbetriebenen Vorrichtung bestehend aus einem Stellglied und einem Ventil nach einem der vorhergehenden Ansprüche, **dadurch gekennzeichnet, dass** es 4 Schritte umfasst:
- einen ersten Schritt, der darin besteht, das Befestigungsmittel in Bezug auf die Ventil-Stellglied-Vorrichtung zu positionieren,
- einen zweiten Schritt, der darin besteht, das Befestigungsmittel örtlich elastisch reversibel zu verformen,
- einen dritten Schritt, der darin besteht, das Befestigungsmittel örtlich plastisch irreversibel zu verformen,
- einem vierten Schritt, der darin besteht, die Verschlussklappe in der Durchführung des Ventils einzusetzen und an der Antriebsachse des Stellglieds zu befestigen, wobei diese Schritte in beliebiger Reihenfolge, hintereinander oder gleichzeitig durchgeführt werden können.

## Claims

1. A motorised assembly comprising an actuator (100-200), a valve (101-201) consisting of a duct (102-202), a valve support (103-203) and a shutter (104) able to close off the duct, the shutter being configured so as to be moved by the actuator by means of a transmission spindle (105-205), a seal (107) and a fixing means (106-206) securing the actuator to the valve, the seal being positioned in a groove (108) in the valve support (103-203) and in contact with the base (109-209) of the actuator, the impermeability of the valve being provided by a crushing of the seal under a force Fⱼ, the assembly consisting of actuator, transmission spindle and shutter having a mass M and being configured so as to be subjected to an acceleration relative to the valve of X g, g being the acceleration due to gravity, **characterised in that** the fixing means is in the form of a clamping collar consisting solely of one or more identical deformable bands (106a, 106b, 206), **in that** the clamping collar has a shape complementary to the base of the actuator on the one hand and to the valve support on the other hand, **in that** the clamping collar grips the base of the actuator and at least partly the valve support, and **in that** the deformable band or bands are deformable locally in a reversible elastic fashion in order to compress the seal by applying an axial contact force Fₐ between the actuator and the valve greater than S₁ × (Fⱼ + M × X × g), with S₁ a safety factor greater than 1, and deformable locally in a non-reversible plastic fashion in order to lock the position.

2. A motorised assembly according to claim 1, **characterised in that** the base of the actuator and the valve are produced from injected plastics material and **in that** S₂×F/A is lower than the elastic limit Rₐ of the material used for the actuator and lower than the elastic limit Rᵥ of the material used for the valve, with A the surface area of contact between the fixing element and the actuator and respectively the valve, S₂ a safety factor greater than 1 and F the contact force between the actuator and the valve.

3. A motorised assembly according to claim 1, **characterised in that** the clamping collar has a substantially circular shape and a cross section in a V shape defining a load angle A_{c}, **in that** the base of the actuator and the valve support have substantially frustoconical circular forms as defining together an assembly angle Aₘ, and **in that** A_{c} is less than Aₘ.

4. A motorised assembly according to claim 3, **characterised in that** the ratio Aₘ/A_{c} is less than 1.1.

5. A motorised assembly according to claim 4, **characterised in that** the ratio Aₘ/A_{c} is typically around 1.03.

6. A motorised assembly according to claim 5, **characterised in that** the clamping collar consists of a plurality of identical deformable bands connected securely to each other through the complementary shape of their ends, and **in that** the bands are assembled in opposite orientations.

7. A motorised assembly according to claim 6, **characterised in that** the complementary shape of the deformable bands comprises at a first end a tongue (113a, 113b) and at a second end an aperture (114a, 114b), and **in that** the tongue is designed to pass through the aperture.

8. A motorised assembly according to claim 5, **characterised in that** the clamping collar consists of a single closed deformable circular band having a complementary shape.

9. A motorised assembly according to claims 7 and 8, **characterised in that** the clamping collar is removable by deformation or destruction of at least one of the complementary shapes.

10. A motorised assembly according to any of the preceding claims, **characterised in that** the deformable bands constituting the fixing means are manufactured solely by cropping and bending methods.

11. A procedure for assembling a fixing means on a motorised actuator and valve assembly according to any of the preceding claims, **characterised in that** it comprises four steps,
a first step consists of positioning the fixing means relative to the valve and actuator assembly,
a second step consists of locally deforming the fixing means in a reversible elastic manner,
a third step consists of locally deforming the fixing means in a non-reversible plastic manner,
a fourth step consists of fitting the closure shutter in the valve duct and fixing it to the transmission spindle of the actuator,
these steps being able to be executed in any order, sequentially or synchronously.
